(19) **Europäisches Patentamt / European Patent Office / Office européen des brevets**

(11) **EP 1 778 763 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **05763135.0**

(22) Anmeldetag: **02.08.2005**

(51) Int Cl.:
*C08G 69/26* (2006.01)     *C08G 69/28* (2006.01)
*C08G 83/00* (2006.01)

(86) Internationale Anmeldenummer:
**PCT/EP2005/008337**

(87) Internationale Veröffentlichungsnummer:
**WO 2006/018125 (23.02.2006 Gazette 2006/08)**

(54) **VERFAHREN ZUR HERSTELLUNG VON HOCHVERZWEIGTEN POLYAMIDEN**

METHOD FOR PRODUCING HIGHLY BRANCHED POLYAMIDES

PROCEDE DE PRODUCTION DE POLYAMIDES HAUTEMENT RAMIFIES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.08.2004 DE 102004039101**

(43) Veröffentlichungstag der Anmeldung:
**02.05.2007 Patentblatt 2007/18**

(73) Patentinhaber: **BASF Aktiengesellschaft 67065 Ludwigshafen (DE)**

(72) Erfinder:
• **STUMBE, Jean-François F-67200 Strasbourg (FR)**
• **BRUCHMANN, Bernd 67251 Freinsheim (DE)**

(56) Entgegenhaltungen:
**EP-A- 1 295 919        US-A1- 2002 022 712
US-B1- 6 541 600**

**Beschreibung**

Die Erfindung betrifft ein Verfahren zur Herstellung von hoch- oder hyperverzweigten Polyamiden, dadurch gekennzeichnet, dass man ein erstes Monomer $A_2$ mit mindestens zwei funktionellen Gruppen A, mit einem zweiten Monomer $B_3$ mit mindestens drei funktionellen Gruppen B, umsetzt, wobei

1) die funktionellen Gruppen A und B miteinander reagieren, und

2) das eine der Monomere A und B ein Amin ist, und das andere der Monomere A und B eine Carbonsäure oder ein Acrylat ist, und

3) das Molverhältnis $A_2 : B_3$ von 1,1:1 bis 20:1 beträgt.

Außerdem betrifft die Erfindung die nach dem Verfahren erhältlichen Polyamide, deren Verwendung zur Herstellung von Formkörpern, Folien, Fasern und Schäumen, sowie die Formkörper, Folien, Fasern und Schäume aus den Polyamiden.

Dendrimere lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei wächst mit jedem Verknüpfungsschritt die Zahl der Monomerendgruppen exponentiell an, und man erhält Polymere mit kugelförmigen Baumstrukturen, deren Äste exakt dieselbe Anzahl Monomereinheiten enthalten. Aufgrund dieser "perfekten" Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man dendritische Polymere üblicherweise nur im Labormaßstab herstellt.

Jedoch kann man mit großtechnischen Verfahren hochverzweigte bzw. hyperverzweigte Polymere herstellen. Sie weisen neben perfekten dendritischen Strukturen auch lineare Polymerketten und ungleiche Polymeräste auf, was jedoch die Polymereigenschaften nicht wesentlich verschlechtert, verglichen mit den perfekten Dendrimeren. Hyperverzweigte Polymere lassen sich über zwei Synthesewege herstellen, die als $AB_2$- und $A_2+B_3$-Strategie bekannt sind. Darin stehen A und B für funktionelle Gruppen in einem Molekül. Beim $AB_2$-Weg wird ein trifunktionelles Monomer, mit einer Funktionalität A und zwei funktionellen Gruppen B zu einem hyperverzweigten Polymer umgesetzt. Bei der $A_2+B_3$-Synthese setzt man zunächst ein Monomer mit zwei funktionellen Gruppen A mit einem Monomer mit drei funktionellen Gruppen B um. Es entsteht im Idealfall ein 1:1-Addukt mit nur noch einer funktionellen Gruppe A und zwei funktionellen Gruppen B, ein sogenanntes "pseudo-AB,-Molekül", das dann zu einem hyperverzweigten Polymer weiterreagiert.

Die vorliegende Erfindung betrifft die $A_2B_3$-Synthese, bei der man ein mindestens difunktionelles Monomer $A_2$ mit einem mindestens trifunktionellen Monomer $B_3$ umsetzt.

Die EP-A 802 215 beschreibt die Herstellung von Polyamidoaminen aus endgruppenverkappten linearen Präpolymeren, wobei eine Dicarbonsäure mit einem Polyamin zu einem Präpolymer umgesetzt wird. Dessen Kettenenden werden danach mit dem Verkappungsmittel zu einem Polymer umgesetzt, das keine Amin- oder Carboxylendgruppen aufweist. Schließlich setzt man diese Polymerketten mit Epichlorhydrin oder einem anderen "intralinker" zum Endprodukt um.

In der US 6,541,600 B1 wird die Herstellung wasserlöslicher hochverweigter Polyamide u.a. aus Aminen R $(NH_2)_x$ und Carbonsäuren $R(COOH)y$ , wobei x und y jeweils mindestens 2, und x und y nicht gleichzeitig 2 sind, beschrieben. Einige der Monomereinheiten enthalten eine Amin- Phosphin-, Arsenin- oder Sulfiid-Gruppe, weshalb das Polyamid N-, P-, As- oder S-Atome enthält, das Oniumionen bilden. Das molare Verhältnis der funktionellen Gruppen wird sehr breit mit $NH_2$ zu COOH oder COOH zu $NH_2$ gleich 2:1 bis 100:1 angegeben.

Die EP-A 1 295 919 erwähnt in die Herstellung von u.a. Polyamiden aus Monomerpaaren $A_s$ und $B_t$ mit s ≥ 2 und t ≥ 3, beispielsweise aus Tris(2-ethylamino)triamin und Bernsteinsäure oder 1,4-Cyclohexandicarbonsäure im Molverhältnis Triamin : Dicarbonsäure von 2:1, also mit einem Überschuss des trifunktionellen Monomers.

Die US 2003/0069370 A1 und US 2002/0161113 A1 offenbaren die Herstellung von u.a. hyperverzweigten Polyamiden aus Carbonsäuren und Aminen, bzw. von Polyamidoaminen aus Acrylaten und Aminen, wobei das Amin mindestens difunktionell und die Carbonsäure bzw. das Acrylat mindestens trifunktionell ist, oder umgekehrt. Die Molverhältnisse von difunktionellem zu trifunktionellen Monomer können kleiner oder größer als eins sein; genauere Angaben werden nicht gemacht. In Beispiel 9 wird ein Polyamidoamin in einer Michael-Addition aus $N(C_2H_4NH_2)_3$ und $N(CH_2CH_2N(CH_2CH_2COOCH_3)_2)_3$ hergestellt.

Die Verfahren des Standes der Technik sind entweder umständlich, da sie mehrere Reaktionsschritte erfordern, oder es werden "exotische" und damit teure Monomere verwendet. Außerdem weisen die erhaltenen verzweigten Polymere eine Struktur mit unzulänglichen Verzweigungen auf und haben deshalb ungenügende Eigenschaften.

Es bestand die Aufgabe, den geschilderten Nachteilen abzuhelfen. Insbesondere sollte ein Verfahren bereitgestellt werden, mit dem sich hyperverweigte Polyamide auf einfache Weise, möglichst in einer Ein-Topf-Reaktion, herstellen lassen.

Das Verfahren sollte von handelsüblichen, preiswerten Monomeren ausgehen.

Außerdem sollten sich die erhaltenen Polyamide durch eine verbesserte Struktur, insbesondere durch idealere Verzweigungen, auszeichnen.

Demgemäß wurde das eingangs definierte Verfahren, sowie die damit erhältlichen Polymere gefunden. Außerdem wurden die erwähnte Verwendung und die genannten Formkörper, Folien, Fasern und Schäume, gefunden. Bevorzugte Ausführungsformen der Erfindung sind den Unteransprüchen zu entnehmen.

Die hoch- und hyperverzweigten Polyamide im Sinne der Erfindung schließen hoch- und hyperverweigte "Polyamidoamine" (siehe die erwähnte EP-A 802 215, US 2003/0069370 A1 und US 2002/0161113 A1) mit ein.

Obwohl das erste Monomer $A_2$ auch mehr als zwei funktionelle Gruppen A aufweisen kann, wird es hier der Einfachheit halber als $A_2$ bezeichnet, und obwohl das zweite Monomer $B_3$ auch mehr als drei funktionelle Gruppen B aufweisen kann, wird es hier der Einfachheit halber als $B_3$ bezeichnet. Wesentlich ist nur, dass sich die Funktionalitäten von $A_2$ und $B_3$ unterscheiden.

Gemäß Bedingung 1) des Hauptanspruchs reagieren die funktionellen Gruppen A und B miteinander. Die funktionellen Gruppen A und B sind also derart gewählt, dass A nicht (oder nur in unwesentlichem Ausmaß) mit A, und B nicht (oder nur in unwesentlichem Ausmaß) mit B, wohl aber A mit B reagiert.

Gemäß Bedingung 2) des Hauptanspruchs ist das eine der Monomere A und B ein Amin, und das andere der Monomere A und B eine Carbonsäure.

Bevorzugt und gemäß Bedingung 2a) von Anspruch 2 ist das Monomer $A_2$ eine Carbonsäure mit mindestens zwei Carboxylgruppen, und das Monomer $B_3$ ist ein Amin mit mindestens drei Aminogruppen. Alternativ und gemäß Bedingung 2b) von Anspruch 2 ist das Monomer $A_2$ ein Amin mit mindestens zwei Aminogruppen, und das Monomer $B_3$ eine Carbonsäure mit mindestens drei Carboxylgruppen.

Geeignete Carbonsäuren weisen üblicherweise 2 bis 4, insbesondere 2 oder 3 Carboxylgruppen, und einen Alkylrest, Arylrest oder Arylalkylrest mit 1 bis 30 C-Atomen auf.

Als Dicarbonsäuren kommen z.B. in Betracht: Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cydohexan-1,2-dicarbonsäure, cis- und trans-Gyclohexan-1,3-dicarbonsäure, cis- und trans-Cyclohexan-,1,4-dicarbonsäure, cis- und trans-Cyclopentan-1,2-dicarbonsäure sowie cis- und trans-Gyclopentan-1,3-dicarbonsäure, wobei die Dicarbonsäuren substituiert sein können mit einem oder mehreren Resten, aüsgewählt aus:

$C_1$-$C_{10}$)-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,

Alkylengruppen wie Methylen oder Ethyliden, oder

$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als Beispiele für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure und 3,3-Dimethylglutarsäure.

Ebenso sind ethylenisch ungesättigte Dicarbonsäuren wie beispielsweise Maleinsäure und Fumarsäure sowie aromatische Dicarbonsäuren wie beispielsweise Phthalsäure, Isophthalsäure oder Terephthalsäure, geeignet.

Als Tricarbonsäuren bzw. Tetracarbonsäuren eignen sich z.B. Trimesinsäure, Trimellitsäure, Pyromellitsäure, Butantricarbonsäure, Naphthalentricarbonsäure und Cyclohexan-1,3,5-tricarbonsäure.

Weiterhin lassen sich Gemische von zwei oder mehreren der vorgenannten Carbonsäuren einsetzen. Die Carbonsäuren können entweder als solche oder in Form von Derivaten verwendet werden. Solche Derivate sind insbesondere

- die Anhydride der genannten Carbonsäuren, und zwar in monomerer oder auch polymerer Form;
- die Ester der genannten Carbonsäuren, z.B.

o Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert-Butanol, n-Pentanol, n-Hexanol abgeleiteten Mono- und Dialkylester,
o Mono- und Divinylester sowie
o gemischte Ester, bevorzugt Methylethylester.

Man kann auch ein Gemisch aus einer Carbonsäure und einem oder mehreren ihrer Derivate, oder ein Gemisch mehrerer verschiedener Derivate von einer oder mehreren Dicarbonsäuren, einsetzen.

Besonders bevorzugt setzt man als Carbonsäure Bernsteinsäure, Glutarsäure, Adipinsäure, Phthalsäure, Isophthalsäure, Terephthalsäure oder deren Mono- oder Dimethylester ein. Ganz besonders bevorzugt ist Adipinsäure.

Geeignete Amine weisen üblicherweise 2 bis 6, insbesondere 2 bis 4 Aminogruppen, und einen Alkylrest, Arylrest oder Arylalkylrest mit 1 bis 30 C-Atomen auf.

Als Diamine kommen z.B. solche der Formel $R^1$-NH-$R^2$-NH-$R^3$ in Betracht, worin $R^1$, $R^2$ und $R^3$-unabhängig voneinander Wasserstoff oder einen Alkylrest, Arylrest oder Arylalkylrest mit 1 bis 20 C-Atomen bedeuten. Der Alkylrest kann linear oder insbesondere für $R^2$ auch cyclisch sein.

Geeignete Diamine sind beispielsweise Ethylendiamin, die Propylendiamine (1,2-Diaminopropan and 1,3-Diaminopropan), N-Methyl-ethylendiamin, Piperazin, Tetramethylendiamin (1,4-Diaminobutan), N,N'-Dimethylethylendiamin, N-Ethylethylendiamin, 1,5-Diaminopentan, 1,3-Diamino-2,2-diethylpropan, 1,3-Bis(methylamino)-propan, Hexamethylendiamin (1,6-Diaminohexan), 1,5-Diamino-2-methylpentan, 3-(Propylamino)-propylamin, N,N'-Bis-(3-aminopropyl)-piperazin, N,N'-Bis-(3-aminopropyl)-piperazin und Isophorondiamin (IPDA).

Als Triamine, Tetramine bzw. höherfunktionelle Amine eignen sich z.B. Tris(2-aminoethyl)amin, Tris(2-aminopropyl)amin, Diethylentriamin (DETA), Triethylentetramin (TETA), Tetraethylenpentamin (TEPA), Isopropylentriamin, Dipropylentriamin und N,N'-bis(3-aminopropyl-ethylendiamin).

Aminobenzylamine und Aminohydrazide mit 2 oder mehr Aminogruppen sind ebenfalls geeignet.

Bevorzugt verwendet man als Amine DETA oder Tris(2-aminoethyl)amin oder deren Mischungen.

Man kann auch Gemische mehrerer Carbonsäuren bzw. Carbonsäurederivate, oder Gemische mehrerer Amine, verwenden. Dabei kann die Funktionalität der verschiedenen Carbonsäuren oder Amine gleich oder verschieden sein.

Insbesondere kann man, wenn das Monomer $A_2$ ein Diamin ist, als Monomer $B_3$ Gemische von Dicarbonsäuren und Tricarbonsäuren (oder höherfunktionellen Carbonsäuren) verwenden, wobei das Gemisch $B_3$ eine mittlere Funktionalität von mindestens 2,1 hat. Beispielsweise hat ein Gemisch aus 50 mol-% Dicarbonsäure und 50 mol-% Tricarbonsäure eine mittlere Funktionalität von 2,5.

In ähnlicher Weise kann man, wenn das Monomer $A_2$ eine Dicarbonsäure ist, als Monomer $B_3$ Gemische von Diaminen und Triaminen (oder höherfunktionellen Aminen) verwenden, wobei das Gemisch $B_3$ eine mittlere Funktionalität von mindestens 2,1 hat. Diese Variante ist besonders bevorzugt. Beispielsweise hat ein Gemisch aus 50 mol-% Diamin und 50 mol-% Triamin eine mittlere Funktionalität von 2,5.

Die Reaktivität der funktionellen Gruppen A des Monomers $A_2$ kann gleich oder verschieden sein. Ebenso kann die Reaktivität der funktionellen Gruppen B des Monomers $B_3$ gleich oder verschieden sein. Insbesondere kann die Reaktivität der zwei Aminogruppen des Monomers $A_2$ bzw. der drei Aminogruppen des Monomers $B_3$, gleich oder verschieden sein.

In einer bevorzugten Ausführungsform ist die Carbonsäure das difunktionelle Monomer $A_2$ und das Amin das trifunktionelle Monomer $B_3$, d.h. bevorzugt verwendet man Dicarbonsäuren, und Triamine oder höherfunktionelle Amine.

Besonders bevorzugt verwendet man als Monomer $A_2$ eine Dicarbonsäure und als Monomer $B_3$ ein Triamin. Ganz besonders bevorzugt wird als Monomer $A_2$ Adipinsäure, und als Monomer $B_3$ Diethylentriamin oder Tris(2-aminoethyl)amin verwendet.

Gemäß Bedingung 3) des Hauptanspruchs beträgt das Molverhältnis $A_2$: $B_3$ von 1,1:1 bis 20:1. Demnach wird erfindungsgemäß das difunktionelle Monomer $A_2$ in einem definierten (nicht etwa beliebigen) Überschuss verwendet. Bevorzugt beträgt das Molverhältnis $A_2$ $B_3$ von 1,1:1 1 bis 10:1. Dieses Molverhältnis ist bei zwei- oder mehrstufiger Umsetzung, wie sie nachfolgend beschrieben wird, das Molverhältnis über alle Stufen.

Man kann die Umsetzung der Monomere $A_2$ und $B_3$ einstufig durchführen, indem man $A_2$ und $B_3$ im entsprechenden Molverhältnis zusammengibt und unmittelbar zum Endprodukt Polyamid umsetzt. Bei dieser einstufigen Umsetzung ist bevorzugt die Reaktivität der funktionellen Gruppen B des Monomers $B_3$ gleich. Bei der einstufigen Umsetzung beträgt das Molverhältnis $A_2$: $B_3$ von 1,1:1 bis 20:1, bevorzugt von 1,1: bis 10:1 und besonders bevorzugt 1,2:1 bis 3:1.

Besonders bevorzugt sind die Aminogruppen gleich und das Molverhältnis $A_2$ : $B_3$ beträgt 1,2:1 bis 3:1.

In einer anderen, besonders bevorzugten Ausführungsform nimmt man die Umsetzung von $A_2$ und $B_3$ mehrstufig vor, insbesondere zweistufig. Diese mehrstufige Umsetzung ist insbesondere dann bevorzugt, wenn die Reaktivität der funktionellen Gruppen B des Monomers $B_3$ verschieden ist.

Bei einer zweistufigen Umsetzung setzt man in der ersten Stufe $A_2$ in großem molaren Überschuss gegenüber $B_3$ ein; insbesondere beträgt in dieser ersten Stufe das Molverhältnis $A_2$: $B_3$ von 2,5:1 bis 20:1, vorzugsweise 2,5:1 bis 6:1. Durch den großen molaren Überschuss an $A_2$ entsteht ein Präpolymer mit freien (nicht umgesetzten) Endgruppen A. In vielen Fällen beobachtet man am Ende der ersten Stufe einen schnellen Viskositätsanstieg der Reaktionsmischung, was zum Erkennen des Reaktionsendes herangezogen werden kann.

In der zweiten Stufe setzt man das erhaltene Präpolymer mit weiterem Monomer $B_3$ zum Endprodukt um, wobei die Endgruppen A des Präpolymers-mit $B_3$ reagieren. An= stelle des Monomers $B_3$ kann man auch ein Monomer $B_2$ mit zwei (statt, wie bei $B_3$, drei oder mehr) funktionellen Gruppen B verwenden.

Demnach sind in einer bevorzugten Ausführungsform die Aminogruppen verschieden und man setzt die Monomeren $A_2$ und $B_3$ in einem Molverhältnis $A_2 : B_3$ von 2,5,1: bis 20:1 miteinander um, wodurch ein Präpolymer mit den funktionellen Gruppen A als Endgruppen entsteht, und anschließend setzt man dieses Präpolymer mit weiterem Monomer $B_3$ oder mit einem Monomer $B_2$ mit zwei funktionellen Gruppen B, um.

Beispielsweise kann man in der ersten Stufe ein Triamin $B_3$ mit einem hohen molaren Überschuss Dicarbonsäure $A_2$, zu einem Präpolymer mit Carboxylendgruppen umsetzen, und in der zweiten Stufe dieses Präpolymer mit weiterem Triamin $B_3$ oder mit einem Diamin $B_2$ zum Endprodukt umsetzen. Als Triamin $B_3$ ist auch das erwähnte Gemisch aus Diamin und Triamin mit einer mittleren Funktionalität von mindestens 2,1 geeignet.

In ähnlicher Weise - jedoch weniger bevorzugt - kann man in der ersten Stufe eine Tricarbonsäure $B_3$ mit einem hohen molaren Überschuss Diamin $A_2$, zu einem Präpolymer mit Aminoendgruppen umsetzen, und in der zweiten Stufe dieses Präpolymer mit weiterer Tricarbonsäure $B_3$ oder einer Dicarbonsäure $B_2$ zum Endprodukt umsetzen.

Als Tricarbonsäure $B_3$ ist auch das erwähnte Gemisch aus Dicarbonsäure und Tricarbonsäure mit einer mittleren Funktionalität von mindestens 2,1 geeignet.

Die Menge des in der zweiten Stufe erforderlichen Monomers $B_3$ bzw. $B_2$ richtet sich u.a. nach der Anzahl der freien Endgruppen A im Präpolymer. Dieser Endgruppengehalt der Präpolymers kann z.B. durch Titration der Säurezahl nach DIN 53402-2, bestimmt werden.

Üblicherweise verwendet man 0,25 bis 2 mol, bevorzugt 0,5 bis 1,5 mol des Monomers $B_3$ bzw. $B_2$ pro ein mol Endgruppen A. Bevorzugt setzt man etwa 1 mol $B_3$ bzw. $B_2$ pro 1 mol Endgruppen A ein, beispielsweise 1 mol Triamin oder Diamin pro 1 mol Carboxylendgruppen. Man kann das Monomer $B_3$ bzw. $B_2$ beispielsweise auf einmal, diskontinuierlich in mehreren Portionen; oder kontinuierlich z.B. entlang einer linearen, steigenden, fallenden oder Treppen-Funktion zufügen.

Beide Stufen lassen sich auf einfache Weise im selben Reaktor durchführen; eine Isolierung des Präpolymers oder das Einführen und Wiederentfernen von Schutzgruppen ist nicht erforderlich. Natürlich kann man für die zweite Stufe auch einen anderen Reaktor verwenden.

Falls man in mehr als zwei Stufen umsetzt, kann man entweder die erste Stufe (Herstellung des Präpolymers) und/oder die zweite Stufe (Umsetzung mit $B_3$ bzw. $B_2$) in mehreren Teilstufen ausführen.

Durch die mehrstufige Umsetzung lassen sich hyperverzweigte Polyamide mit höheren Molekulargewichten herstellen. Dabei sind durch Variation der Molverhältnisse Polymere erhältlich, die definierte terminale Monomereinheiten (Endgruppen der Polymeräste) aufweisen. Beispielsweise kann man Polyamide mit terminalen Aminogruppen herstellen.

Mit der zweistufigen Umsetzung lassen sich außerdem Polymere mit einem höheren Verzeigungsgrad (DB, degree of branching) herstellen. Der Verzweigungsgrad ist definiert als

$$DB = \frac{T + Z}{T + Z + L}$$

wobei T die Anzahl der terminalen Monomereinheiten, Z die Anzahl der verzweigten Monomereinheiten, und L die Anzahl der linearen Monomereinheiten, bedeutet.

Bei den durch einstufige Umsetzung erhalten Polyamiden beträgt der Verzweigungsgrad DB üblicherweise 0,2 bis 0,7, bevorzugt 0,3 bis 0,6 und insbesondere 0,35 bis 0,55. Bei den durch zweistufige Umsetzung erhalten Polyamiden beträgt der Verzweigungsgrad DB üblicherweise 0,3 bis 0,8, bevorzugt 0,35 bis 0,7 und insbesondere 0,4 bis 0,7.

Während oder nach der Polymerisation der Monomeren $A_2$ und $B_3$ zum hyperverzweigten Polyamid, kann man di- oder höherfunktionelle, als Kettenverlängerer wirkende Monomere C mitverwenden. Dadurch lässt sich der Gelpunkt des Polymeren (Zeitpunkt, an dem durch Vernetzungsreaktionen unlösliche Gelpartikel gebildet werden, siehe z.B. Flory, Principles of Polymer Chemistry, Cornell University Press, 1953, Seiten 387-398) kontrollieren, und die Architektur des Makromoleküls, also die Verknüpfung der Monomeräste, verändern.

Demnach ist das Verfahren in einer bevorzugten Ausführungsform dadurch gekennzeichnet, dass man während oder nach der Umsetzung der Monomeren $A_2$ und $B_3$ ein als Kettenverlängerer wirkendes Monomer C mitverwendet.

Als kettenverlängerndes Monomer C geeignet sind z.B. die bereits genannten Diamine oder höherfunktionellen Amine, die mit den Carboxylgruppen verschiedener Polymeräste reagieren und sie so verbinden. Geeignet ist insbesondere Isophorondiamin, Ethylendiamin, die Propylendiamine (1,2-Diaminopropan and 1,3-Diaminopropan), N-Methyl-ethylendiamin, Piperazin, Tetramethylendiamin (1,4-Diaminobutan), N,N'-Dimethylethylendiamin, N-Ethylethylendiamin, 1,5-Diaminopentan, 1,3-Diamino-2,2-diethylpropan, 1,3-Bis(methylamino)propan, Hexamethylendiamin (1,6-Diaminohexan), 1,5-Diamino-2-methylpentan, 3-(Propylamino)-propylamin, N,N'-Bis-(3-aminopropyl)-piperazin, N,N'-Bis-(3-aminopropyl)-piperazin und Isophorondiamin (IPDA).

Auch Aminosäuren der allgemeinen Formel $H_2N$-R-COOH sind als Kettenverlängerer C geeignet, wobei R ein organischer Rest ist.

Die Menge der Kettenverlängerer C richtet sich in üblicher Weise nach dem gewünschten Gelpunkt bzw. der gewünschten Architektur des Makromoleküls. In der Regel beträgt die Menge der Kettenverlängerer C 0,1 bis 50, bevorzugt 0,5 bis 40 und insbesondere 1 bis 30 Gew.-%, bezogen auf die Summe der eingesetzten Monomeren $A_2$ und $B_3$.

Mit dem erfindungsgemäßen Verfahren lassen sich auch funktionalisierte Polyamide herstellen. Dazu werden monofunktionelle Comonomere D mitverwendet, wobei diese vor, während oder nach der Umsetzung der Monomeren $A_2$ und $B_3$ zugefügt werden können. Man erhält auf diese Weise ein mit den Comonomereinheiten und deren funktionellen Gruppen chemisch modifiziertes Polymer.

Demnach ist Verfahren in einer bevorzugten Ausführungsform dadurch gekennzeichnet, dass man vor, während oder nach der Umsetzung der Monomeren $A_2$ und $B_3$, ein Comonomer D mit einer funktionellen Gruppe mitverwendet, wodurch ein modifiziertes Polyamid entsteht.

Solche Comonomere D sind beispielsweise gesättigte oder ungesättigte Monocarbonsäuren, auch Fettsäuren, und deren Anhydride bzw. Ester. Geeignet sind z.B. Essigsäure, Propionsäure, Buttersäure, Valeriansäure, Isobuttersäure, Trimethylessigsäure, Capronsäure, Caprylsäure, Heptansäure, Caprinsäure, Pelargonsäure, Laurinsäure, Myristinsäure, Palmitinsäure, Montansäure, Stearinsäure, Isostearinsäure, Nonansäure, 2-Ethylhexansäure, Benzoesäure und ungesättigte Monocarbonsäuren wie Methacrylsäure, sowie die Anhydride und Ester, beispielsweise Acrylsäureester oder Methacrylsäureester, der genannten Monocarbonsäuren.

Als ungesättigte Fettsäuren D eignen sich z.B. Ölsäure, Ricinolsäure, Linolsäure, Linolensäure, Erucasäure, Fettsäuren aus Soja, Leinsamen, Ricinus und Sonnenblume.

Geeignete Carbonsäureester D sind insbesondere Methylmethacrylat, Hydroxyethylmethacrylat und Hydroxypropylmethacrylat.

Als Comonomere D kommen auch Alkohole, auch Fettalkohole, in Betracht, z.B. Glycerolmonolaurat, Glycerolmonostearat, Ethylenglycolmonomethylether, die Polyethylenmonomethylether, Benzylalkohol, 1-Dodecanol, 1-Tetradecanol, 1-Hexadecanol und ungesättigte Fettalkohole.

Geeignete Comonomere D sind außerdem Acrylate, insbesondere Alkylacrylate wie n-, iso- und tert-Butylacrylat, Laurylacrylat, Stearylacrylat, oder Hydroxyalkylacrylate wie Hydroxyethylacrylat, Hydroxypropylacrylat und die Hydroxybutylacrylate. Die Acrylate lassen sich auf besonders einfache Weise durch Michael-Addition an den Aminogruppen des hyperverzweigten Polyamids in das Polymer einführen.

Die Menge der Comonomere D richtet sich in üblicher Weise danach, in welchem Ausmaß das Polymer modifiziert werden soll. In der Regel beträgt die Menge der Comonomeren D 0,5 bis 40, bevorzugt 1 bis 35 Gew.-%, bezogen auf die Summe der eingesetzten Monomeren $A_2$ und $B_3$.

Je nach Art und Menge der eingesetzten Monomeren und den Reaktionsbedingungen kann das hyperverzweigte Polyamid terminale Carboxylgruppen (-COOH) oder terminale Aminogruppen (-NH, $-NH_2$) oder beides aufweisen. Die Wahl des zur Funktionalisierung zugefügten Comonomers D richtet sich in üblicher Weise nach Art und Anzahl der terminalen Gruppen, mit denen D reagiert. Falls Carboxylendgruppen modifiziert werden sollen, verwendet man bevorzugt 0,5 bis 2,5, bevorzugt 0,6 bis 2 und besonders bevorzugt 0,7 bis 1,5 molare Äquivalente eines Amins, z.B. eines Mono- oder Diamins und insbesondere eines Triamins mit primären oder sekundären Amingruppen, pro ein mol Carboxylendgruppen.

Falls Aminoendgruppen modifiziert werden sollen, verwendet man bevorzugt 0,5 bis 2,5, bevorzugt 0,6 bis 2 und besonders bevorzugt 0,7 bis 1,5 molare Äquivalente einer Monocarbonsäure pro ein mol Aminoendgruppen.

Wie erwähnt können Aminoendgruppen auch mit den genannten Acrylaten in einer Michael-Addition umgesetzt werden, wozu man bevorzugt 0,5 bis 2,5, insbesondere 0,6 bis 2 und besonders bevorzugt 0,7 bis 1,5 molare Äquivalente eines Acrylats pro ein mol Aminoendgruppen, verwendet.

Die Zahl freier COOH-Gruppen (Säurezahl) des Endprodukts Polyamid beträgt in der Regel 0 bis 400, bevorzugt 0 bis 200 mg KOH pro Gramm Polymer und kann z.B. durch Titration nach DIN 53240-2 bestimmt werden.

Zu den Reaktionsbedingungen ist zu sagen:

Die Umsetzung der Monomere $A_2$ mit den Monomeren $B_3$ erfolgt in der Regel bei erhöhter Temperatur, beispielsweise 80 bis 180, insbesondere 90 bis 160°C. Bevorzugt arbeitet man unter Inertgas, z.B. Stickstoff, oder im Vakuum, in Anwesenheit oder Abwesenheit eines Lösungsmittels wie Wasser, 1,4-Dioxan, Dimethylformamid (DMF) oder Dimethylacetamid (DMAC). Gut geeignet sind Lösungsmittelgemische z.B. aus Wasser und 1,4-Dioxan. Erforderlich ist ein Lösungsmittel jedoch nicht; beispielsweise kann man die Carbonsäure vorlegen und aufschmelzen, und der Schmelze das Amin zufügen. Das im Verlauf der Polymerisation (Polykondensation) gebildete Reaktionswasser wird beispielsweise im Vakuum abgezogen oder bei Verwendung von geeigneten Lösungsmitteln wie Toluol, durch azeotrope Destillation entfernt.

Sofern man die Polymerisation zweistufig vornimmt, kann man wie erwähnt das Ende der ersten Stufe (Umsetzung von $B_3$ mit großem Überschuss $A_2$) oftmals daran erkennen, dass die Viskosität der Reaktionsmischung plötzlich schnell anzusteigen beginnt. Beim beginnenden Viskositätsanstieg kann man die Reaktion abstoppen, beispielsweise durch Abkühlen. Danach kann man an einer Probe der Mischung die Endgruppenanzahl im Präpolymer bestimmen, beispielsweise durch Titration des Säurewerts nach DIN 53402-2. Anschließend wird in der zweiten Stufe die entsprechend der Endgruppenanzahl erforderliche Menge Monomer $B_3$ bzw. $B_2$ zugefügt und so das Präpolymer zum Endprodukt umgesetzt.

Der Druck ist in der Regel unkritisch und liegt bei z.B. 1 mbar bis 100 bar absolut. Falls man kein Lösungsmittel verwendet, kann durch Arbeiten unter Vakuum, z.B. 1 bis 500 mbar, das Reaktionswasser auf einfache Weise entfernt werden.

Die Reaktionsdauer beträgt üblicherweise 5 Minuten bis 48 Stunden, bevorzugt 30 min bis 24 Stunden und besonders bevorzugt 1 Stunde bis 10 Stunden.

Die Umsetzung von Carbonsäure und Amin kann in Abwesenheit oder Anwesenheit von Katalysatoren erfolgen. Geeignete Katalysatoren sind beispielsweise die weiter unten genannten Amidierungskatalysatoren.

Falls Katalysatoren mitverwendet werden, beträgt ihre Menge üblicherweise 1 bis 5000, bevorzugt 10 bis 1000 ppm by weight, bezogen auf die Summe der Monomeren $A_2$ und $B_3$.

Während oder nach der Polymerisation können, falls gewünscht, die erwähnten Kettenverlängerer C zugefügt werden. Außerdem kann man vor, während oder nach der Polymerisation die genannten Comonomere D zufügen, um das hyperverzweigte Polyamid chemisch zu modifizieren.

Die Reaktion-der Comonomere D-kann durch übliche Amidierungskatalysatoren katalysiert werden, falls erforderlich. Solche Katalysatoren sind z.B. Ammoniumphosphat, Triphenylphosphit oder Dicyclohexylcarbodümid. Insbesondere bei temperaturempfindlichen Comonomeren D, und bei Methacrylaten oder Fettalkoholen als Comonomer D, kann man die Reaktion auch durch Enzyme katalysieren, wobei man üblicherweise bei 40 bis 90; bevorzugt 50 bis 85 und insbesondere 55 bis 80°C und in Gegenwart eines radikalischen Inhibitors arbeitet.

Der Inhibitor und ggf. Arbeiten unter Inertgas verhindert eine radikalische Polymerisation, und außerdem unerwünschte Vernetzungsreaktionen ungesättigter funktioneller Gruppen. Solche Inhibitoren sind z. B. Hydrochinon, Hydrochinonmonomethylether, Phenothiazin, Phenolderivate wie 2-tert-Butyl-4-methylphenol, 6-tert-Butyl-2,4-dimethylphenol oder N-Oxylverbindungen wie 4-Hydroxy-2,2,6,6-tetramethyl-piperidin-N-oxyl (Hydroxy-TEMPO), 4-Oxo-2,2,6,6-tetramethyl-piperidin-N-oxyl (TEMPO), in Mengen von 50 bis 2000 ppm by weigt, bezogen auf die Summe der Monomeren $A_2$ und $B_3$.

Das erfindungsgemäße Verfahren kann bevorzugt diskontinuierlich, aber auch kontinuierlich durchgeführt werden, beispielsweise in Rührbehältern, Rohrreaktoren, Turmreaktoren oder anderen üblichen Reaktoren, die mit statischen oder dynamischen Mischern, und üblichen Vorrichtungen zur Druck- und Temperaturkontrolle sowie zum Arbeiten unter Inertgas, ausgestattet sein können.

Beim Arbeiten ohne Lösungsmittel erhält man in der Regel unmittelbar das Endprodukt, das erforderlichenfalls durch übliche Reinigungsoperationen gereinigt werden kann. Sofern ein Lösungsmittel mitverwendet wurde, kann dieses nach der Umsetzung in üblicher Weise aus der Reaktionsmischung entfernt werden, etwa durch Vakuumdestillation.

Die nach dem erfindungsgemäßen Verfahren erhältlichen Polyamide sind ebenfalls Gegenstand der Erfindung, außerdem die Verwendung der Polyamide zur Herstellung von Formkörpern, Folien, Fasern und Schäumen, sowie die Formkörper, Folien, Fasern und Schäume aus den erfindungsgemäßen Polyamiden.

Das erfindungsgemäße Verfahren zeichnet sich durch seine große Einfachheit aus. Es ermöglicht die Herstellung von hyperverzweigten Polyamiden in einer simplen Ein-Topf-Reaktion. Die Isolierung oder Reinigung von Zwischenstufen oder Schutzgruppen für Zwischenstufen sind nicht erforderlich. Das Verfahren ist ökonomisch vorteilhaft, da die Monomere handelsüblich und preiswert sind.

Die molekulare Architektur der erhaltenen Polyamide lässt sich durch Verwendung von Kettenverlängerern C einstellen, und durch Einführen von Comonomeren D lässt sich das Polymer maßgeschneidert chemisch mödifizieren.

Beispiele:

Alle Versuche wurden in einem temperierbaren, evakuierbaren Dreihalsrundkolben mit Innenthermometer, unter Rühren und in Stickstoffatmosphäre durchgeführt. Die Viskosität der Reaktionsmischung wurde visuell oder durch Probenahme und Messung kontrolliert. Das bei der Reaktion entstehende Wasser wurde durch Anlegen eines Vakuums entfernt und in einer Destillationsvorrichtung gesammelt. DETA bedeutet Diethylentriamin.

Am erhalten Polymer bzw. Präpolymer wurden folgende Eigenschaften bestimmt, die in der Tabelle angegeben sind:

Viskosität nach ISO 2884 mit einem Kegel-Platte-Viskosimeter von Fa. Research Equipment London, REL-ICI, bei der in der Tabelle genannten Temperatur.

Säurezahl nach DIN 53402-2 als Milligramm Kaliumhydroxid pro Gramm Polymer.

Molekulargewicht: Zahlenmittel $M_n$ und Gewichtsmittel $M_w$ durch Gelpermeationschromatographie/Size Exclusion Chromatography (GPC/SEC) bei 40°C mit einer 0,05 gew.-igen Lösung von Trifluoressigsäure-Kaliumsalz in Hexafluoroisopropanol (HFIP) als Eluent, und HFIP Gel-Säulen (Polystyrol/Divinylbenzol, von Fa. Polymer Laboratories) als Säule.

Vergleichsbeispiele: Dicarbonsäure $A_2$ und Triamin A3, Molverhältnis $A_2$: $B_3$ beträgt <1:1

Vergleichsbeispiel

Man legte 80 g (0,547 mol) Adipinsäure vor und schmolz bei 150°C auf. Zur Schmelze tropfte man bei 120°C innerhalb 1 Stunde 84,7 g (0,821 mol) DETA und entfernte das Wasser im Vakuum (30 mbar). Während des Zutropfens stieg die Viskosität der Reaktionsmischung langsam und gleichmäßig an. Nach dem Zutropfen ließ man solange bei 120°C nachreagieren, bis die Viskosität nach 1,5 Stunden Nachreaktionszeit nicht weiter anstieg. Die Umsetzung wurde durch Abkühlenlassen auf 20°C gestoppt. Das erhaltene Polyamid war schwach gelblich und von honigartiger Viskosität.

Erfindungsgemäße Beispiele: Dicarbonsäure $A_2$ und Triamin A3, Molverhältnis $A_2$: $B_3$ beträgt 1,1:1 bis 20:1

Beispiel 1: einstufige Umsetzung

Man legte 92 g (0,63 mol) Adipinsäure vor und schmolz bei 150°C auf. Zur Schmelze tropfte man bei 150°C innerhalb 1 Stunde 54 g (0,525 mol) DETA und entfernte das Wasser im Vakuum (50 mbar). Während des Zutropfens stieg die Viskosität der Reaktionsmischung langsam und gleichmäßig an. Nach dem Zutropfen ließ man bei 130°C nachreagieren. Sobald die Viskosität stark anstieg (d.h. vor Erreichen des Gelpunktes) wurde die Umsetzung durch Abkühlenlassen auf 20°C gestoppt. Das erhaltene Polyamid war schwach gelblich und viskos.

Beispiel 2: einstufige Umsetzung

Man legte 300 g (2,053 mol) Adipinsäure vor und schmolz bei 150°C auf. Zur Schmelze tropfte man bei 150°C innerhalb 1 Stunde 84,7 g (0,821 mol) DETA und entfernte das Wasser im Vakuum (200 mbar). Während des Zutropfens stieg die Viskosität der Reaktionsmischung langsam und gleichmäßig an. Nach dem Zutropfen ließ man bei 120°C nachreagieren. Sobald die Viskosität stark anstieg (d.h. vor Erreichen des Gelpunktes) wurde die Umsetzung durch Abkühlenlassen auf 20°C gestoppt. Das erhaltene Polyamid war schwach gelblich und viskos.

Beispiel 3: zweistufige Umsetzung

a) Man legte 120 g (0,821 moi) Adipinsäure vor und schmoiz bei 150°C auf. Zur Schmelze tropfte man bei 150°C innerhalb 1 Stunde 26 g (0,257 mol) DETA und entfernte das Wasser im Vakuum (200 mbar). Während des Zutropfens stieg die Viskosität der Reaktionsmischung langsam und gleichmäßig an. Nach dem Zutropfen ließ man bei 110°C nachreagieren. Sobald die Viskosität nicht mehr weiter anstieg (was das Ende der Umsetzung anzeigte) wurden an einer Probe des erhaltenen Präpolymers die Viskosität, die Säurezahl und die Molekulargewichte bestimmt.

b) Zu der erhaltenen Reaktionsmischung tropfte man entsprechend der Säurezahl des Präpolymers, ein molares Äquivalent DETA (also 1 mol DETA pro 1 mol Carboxylendgruppen, wobei die Zahl der Carboxylendgruppen aus der Säurezahl ermittelt wurde) bei 110°C hinzu und ließ bei dieser Temperatur nachreagieren. Im Verlauf der Polymerisation genommene Proben zeigten anfangs einen deutlichen Anstieg des Molekulargewichts und der Viskosität, und danach eine sinkende Säurezahl. Nach 6 Stunden Nachreaktionszeit wurde die Umsetzung durch Abkühlenlassen auf 20°C gestoppt. Das erhaltene Polyamid war schwach gelblich und viskos.

Beispiel 4: zweistufige Umsetzung

a) Man legte 149,5 g (1,023 mol) Adipinsäure vor und schmolz bei 150°C auf. Zur Schmelze tropfte man bei 150°C innerhalb 1 Stunde 33 g (0,320 mol) DETA und entfernte das Wasser im Vakuum (200 mbar). Während des Zutropfens stieg die Viskosität der Reaktionsmischung langsam und gleichmäßig an. Nach dem Zutropfen ließ man bei 110°C nachreagieren. Sobald die Viskosität stark anstieg (d.h. vor Erreichen des Gelpunktes) wurde die Umsetzung durch Abkühlenlassen auf 20°C gestoppt und an einer Probe des erhaltenen Präpolymers die Säurezahl bestimmt.

b) Zu der erhaltenen Reaktionsmischung tropfte man entsprechend der Säurezahl des Präpolymers, ein molares Äquivalent DETA bei 110°C hinzu und ließ bei dieser Temperatur nachreagieren. Im Verlauf der Polymerisation genommene Proben zeigten anfangs einen deutlichen Anstieg des Molekulargewichts und der Viskosität, und danach eine sinkende Säurezahl. Nach 4 Stunden Nachreaktionszeit wurde die Umsetzung durch Abkühlenlassen auf 20°C gestoppt. Das erhaltene Polyamid war schwach gelblich und hochviskos.

Beispiel 5: zweistufige Umsetzung

a) Man legte 100 g (0,684 mol) Adipinsäure vor und schmolz bei 150°C auf. Zur Schmelze tropfte man bei 150°C innerhalb 1 Stunde 14 g (0,137 mol) DETA und entfernte das Wasser im Vakuum (200 mbar). Während des Zutropfens stieg die Viskosität der Reaktionsmischung langsam und gleichmäßig an. Nach dem Zutropfen ließ man bei 110°C nachreagieren. Sobald die Viskosität stark anstieg (d.h. vor Erreichen des Gelpunktes) wurde die Umsetzung durch Abkühlenlassen auf 20°C gestoppt und an einer Probe des erhaltenen Präpolymers die Säurezahl bestimmt.

b) Zu der erhaltenen Reaktionsmischung tropfte man entsprechend der Säurezahl des Präpolymers, ein molares Äquivalent DETA bei 110°C hinzu und ließ bei dieser Temperatur nachreagieren. Im Verlauf der Polymerisation genommene Proben zeigten anfangs einen deutlichen Anstieg des Molekulargewichts und der Viskosität, und danach eine sinkende Säurezahl. Nach 8 Stunden Nachreaktionszeit wurde die Umsetzung durch Abkühlenlassen auf 20°C gestoppt. Das erhaltene Polyamid war schwach gelblich und viskos.

Beispiel 6: zweistufige Umsetzung in Lösung

a)-Man legte 65 ml einer Mischung aus 70 Vol-% 1,4-Dioxan und 30 Vol.-% Wasser vor und löste darin 50 g (0,342 mol) Adipinsäure und 10 g (0,068 mol) Tris(2-aminoethyl)-amin. Die Reaktion wurde durch Erwärmen der Mischung auf 100°C gestartet. Nach 9,5 Stunden Reaktionsdauer bei dieser Temperatur wurde an einer vom Lösungsmittelgemisch befreiten Probe der Reaktionsmischung die Säurezahl bestimmt.

b) Zu der erhaltenen Reaktionsmischung tropfte man entsprechend der Säurezahl des Präpolymers, ein molares Äquivalent Tris(2-aminoethyl)amin bei 100°C hinzu und ließ bei dieser Temperatur 13 Stunden nachreagieren. Danach ließ man abkühlen und entfernte das Lösungsmittelgemisch im Vakuum. Das erhaltene Polyamid war schwach gelblich und viskos.

Beispiel 7: einstufige Umsetzung mit Comonomer Stearinsäure

Man legte 92 g (0,63 mol) Adipinsäure und 1,5 g (0,005 mol) Stearinsäure vor und schmolz bei 150°C auf. Zur Schmelze tropfte man bei 150°C innerhalb 1 Stunde 54 g (0,525 mol) DETA und entfernte das Wasser im Vakuum (400 mbar). Während des Zutropfens stieg die Viskosität der Reaktionsmischung langsam und gleichmäßig an. Nach dem Zutropfen ließ man bei 110°C nachreagieren. Sobald die Viskosität stark anstieg (d.h. vor Erreichen des Gelpunktes) wurde die Umsetzung durch Abkühlenlassen auf 20°C gestoppt. Das erhaltene Polyamid war schwach gelblich und viskos.

Beispiel 8: einstufige Umsetzung mit Comonomer Benzoesäure

Man legte 200 g (1,359 mol) Adipinsäure und 2,6 g (0,011 mol) Benzoesäure vor und schmolz bei 150°C auf. Zur Schmelze tropfte man bei 150°C innerhalb 1 Stunde 117,7 g (1,14 mol) DETA und entfernte das Wasser im Vakuum (140 mbar). Während des Zutropfens stieg die Viskosität der Reaktionsmischung langsam und gleichmäßig an. Nach dem Zutropfen ließ man bei 110°C nachreagieren. Sobald die Viskosität stark anstieg (d.h. vor Erreichen des Gelpunktes) wurde die Umsetzung durch Abkühlenlassen auf 20°C gestoppt. Das erhaltene Polyamid war schwach gelblich und viskos.

Beispiel 9: einstufige Umsetzung mit Kettenverlängerer Isophorondiamin

Man legte 92 g (0,63 mol) Adipinsäure vor und schmolz bei 150°C auf. Zur Schmelze tropfte man bei 150°C innerhalb 1 Stunde 35,7 g (0,346 mol) DETA und 29,5 g (0,173 mol) Isophorondiamin und entfernte das Wasser im Vakuum (200 mbar). Während des Zutropfens stieg die Viskosität der Reaktionsmischung langsam und gleichmäßig an. Nach dem Zutropfen ließ man bei 110°C nachreagieren. Sobald die Viskosität stark anstieg (d.h. vor Erreichen des Gelpunktes) wurde die Umsetzung durch Abkühlenlassen auf 20°C gestoppt. Das erhaltene Polyamid war ein farbloser Feststoff.

Die Tabelle fasst die Ergebnisse zusammen.

Tabelle: Messergebnisse (--- bedeutet nicht bestimmt)

| Beispiel | Viskosität [1] [mPa•s] | Säurezahl [mg KOH /g] | Mol.gewicht Mn [g/mol] | Mol.gewicht Mw [g/mol] |
|---|---|---|---|---|
| I | 1800 (100°C) | 0 | 3500 | 5700 |
| | | | | |
| 1 | 4800 (150°C) | 137 | 7400 | 13100 |
| 2 | 1700 (150°C) | 417 | --- | --- |
| 3a | 4200(100°C) | 498 | 3400 | 4450 |
| 3b | 1200 (150°C) | 73 | 5800 | 11800 |
| 4a | 4800 (100°C) | 468 | 3700 | 4890 |
| 4b | 3600 (150°C) | 194 | 8800 | 16200 |
| 5a | 200 (125°C) | 521 | 3600 | 4420 |
| 5b | 800 (125°C) | 47 | 4000 | 6400 |
| 6a | --- | 737 | 1770 | 2150 |
| 6b | --- | 143 | 1620 | 2180 |
| 7 | 2200 (125°C) | 144 | 4100 | 6200 |
| 8 | 6200 (125°C) | 221 | 5700 | 8800 |
| 9 | 3200 (125°C) | 172 | 3200 | 4460 |
| [1] Messtemperatur in Klammern | | | | |

**Patentansprüche**

1.  Verfahren zur Herstellung von hoch- oder hyperverzweigten Polyamiden, **dadurch gekennzeichnet, dass** man ein erstes Monomer $A_2$ mit mindestens zwei funktionellen Gruppen A, mit einem zweiten Monomer $B_3$ mit mindestens drei funktionellen Gruppen B, umsetzt, wobei

    1) die funktionellen Gruppen A und B miteinander reagieren, und
    2) das eine der Monomere A und B ein Amin ist, und das andere der Monomere A und B eine Carbonsäure ist, und
    3) das Molverhältnis $A_2$: $B_3$ von 1,1:1 1 bis 20:1 beträgt.

2.  Verfahren nach Anspruch 1, **dadurch gekennzeichnet, dass**

    2a) entweder das Monomer $A_2$ eine Carbonsäure mit mindestens zwei Carboxylgruppen ist, und das Monomer $B_3$ ein Amin mit mindestens drei Aminogruppen ist,
    2b) oder das Monomer $A_2$ ein Amin mit mindestens zwei Aminogruppen ist, und das Monomer $B_3$ eine Carbonsäure mit mindestens drei Carboxylgruppen ist.

3.  Verfahren nach den Ansprüchen 1 bis 2, **dadurch gekennzeichnet, dass** die Reaktivitäten der zwei Aminogruppen des Monomers $A_2$ bzw. der drei Aminogruppen des Monomers $B_3$, gleich oder verschieden sind.

4.  Verfahren nach den Ansprüchen 1 bis 3, **dadurch gekennzeichnet, dass** die Aminogruppen gleich sind und das

Molverhältnis A$_2$ : B$_3$ 1,2:1 bis 3:1 beträgt.

5. Verfahren nach den Ansprüchen 1 bis 4, **dadurch gekennzeichnet, dass** die Aminogruppen verschieden sind und man die Monomeren A$_2$ und B$_3$ in einem Molverhältnis A$_2$ : B$_3$ von 2,5,1: bis 20:1 miteinander umsetzt, wodurch ein Präpolymer mit den funktionellen Gruppen A als Endgruppen entsteht, und man anschließend dieses Präpolymer mit weiterem Monomer B$_3$ oder mit einem Monomer B$_2$ mit 2 funktionellen Gruppen B, umsetzt.

6. Verfahren nach den Ansprüchen 1 bis 5, **dadurch gekennzeichnet, dass** man als Monomer A$_2$ eine Dicarbonsäure und als Monomer B$_3$ ein Triamin verwendet.

7. Verfahren nach den Ansprüchen 1 bis 6, **dadurch gekennzeichnet, dass** man als Monomer A$_2$ Adipinsäure, und als Monomer B$_3$ Diethylentriamin oder Tris(2-aminoethyl)amin, verwendet.

8. Verfahren nach den Ansprüchen 1 bis 7, **dadurch gekennzeichnet, dass** man während oder nach der Umsetzung der Monomeren A$_2$ und B$_3$ ein als Kettenverlängerer wirkendes Monomer C mitverwendet.

9. Verfahren nach den Ansprüchen 1 bis 8, **dadurch gekennzeichnet, dass** man vor, während oder nach der Umsetzung der Monomeren A$_2$ und B$_3$, ein Comonomer D mit einer funktionellen Gruppe mitverwendet, wodurch ein modifiziertes Polyamid entsteht.

10. Polyamide, erhältlich nach dem Verfahren gemäß den Ansprüchen 1 bis 8.

11. Verwendung der Polyamide gemäß Anspruch 10 zur Herstellung von Formkörpern, Folien, Fasern und Schäumen.

12. Formkörper, Folien, Fasern und Schäume aus den Polyamiden gemäß Anspruch 10.

**Claims**

1. A process for preparation of highly branched or hyperbranched polyamides, which comprises reacting a first monomer A$_2$ having at least two functional groups A with a second monomer B$_3$ having at least three functional groups B, where

   1) the functional groups A and B react with one another, and
   2) one of the monomers A and B is an amine and the other of the monomers A and B is a carboxylic acid, and
   3) the molar ratio A$_2$ : B$_3$ is from 1.1:1 to 20:1.

2. The process according to claim 1, wherein

   2a) either the monomer A$_2$ is a carboxylic acid having at least two carboxyl groups and the monomer B$_3$ is an amine having at least three amino groups,
   2b) or the monomer A$_2$ is an amine having at least two amino groups, and the monomer B$_3$ is a carboxylic acid having at least three carboxy groups.

3. The process according to claims 1 to 2, wherein the reactivities of the two amino groups of the monomer A$_2$ or of the three amino groups of the monomer B$_3$ are identical or different.

4. The process according to claims 1 to 3, wherein the amino groups are identical and the molar ratio A$_2$: B$_3$ is from 1.2:1 to 3:1.

5. The process according to claims 1 to 4, wherein the amino groups are different and the monomers A$_2$ and B$_3$ are reacted with one another in a molar ratio A$_2$: B$_3$ of from 2.5:1 to 20:1, giving a prepolymer having the functional groups A as end groups, and then this prepolymer is reacted with further monomer B$_3$ or with a monomer B$_2$ having 2 functional groups B.

6. The process according to claims 1 to 5, wherein the monomer A$_2$ used comprises a dicarboxylic acid and the monomer B$_3$ used comprises a triamine.

7. The process according to claims 1 to 6, wherein the monomer A$_2$ used comprises adipic acid and the monomer B$_3$

used comprises diethylenetriamine or tris(2-aminoethyl)amine.

8. The process according to claims 1 to 7, which, during or after the reaction of the monomers $A_2$ and $B_3$, makes concomitant use of a monomer C acting as chain extender.

9. The process according to claims 1 to 8, which, prior to, during or after the reaction of the monomers $A_2$ and $B_3$, makes concomitant use of a comonomer D having a functional group, giving a modified polyamide.

10. A polyamide, obtainable by the process according to claims 1 to 8.

11. The use of the polyamide according to claim 10 for production of moldings, foils, fibers, or foams.

12. A molding, a foil, a fiber or a foam composed of the polyamide according to claim 10.


**Revendications**

1. Procédé pour la préparation de polyamides hautement ou hyperramifiés, **caractérisé en ce que** l'on fait réagir un premier monomère $A_2$ avec au moins deux groupes fonctionnels A, avec un deuxième monomère $B_3$ avec au moins trois groupes fonctionnels B, dans lequel :

   1) les groupes fonctionnels A et B réagissent l'un avec l'autre et
   2) l'un des monomères A et B est une amine et l'autre des monomères A et B est un acide carboxylique, et
   3) le rapport molaire $A_2$:$B_3$ est compris entre 1,1:1 et 20:1.

2. Procédé selon la revendication 1, **caractérisé en ce que** :

   2a) soit le monomère $A_2$ est un acide carboxylique avec au moins deux groupes carboxyle et le monomère $B_3$ est une amine avec au moins trois groupes amino,
   2b) soit le monomère $A_2$ est une amine avec au moins deux groupes amino et le monomère $B_3$ est un acide carboxylique avec au moins trois groupes carboxyle.

3. Procédé selon les revendications 1 à 2, **caractérisé en ce que** les réactivités des deux groupes amino du monomère $A_2$ et des trois groupes amino du monomère $B_3$, respectivement, sont identiques ou différents.

4. Procédé selon les revendications 1 à 3, **caractérisé en ce que** les groupes amino sont identiques et leur rapport molaire $A_2$:$B_3$ est compris entre 1,2:1 et 3:1.

5. Procédé selon les revendications 1 à 4, **caractérisé en ce que** les groupes amino sont différents et l'on fait réagir l'un avec l'autre les monomères $A_2$ et $B_3$ dans un rapport molaire $A_2$:$B_3$ de 2,5:1 à 20:1, ce qui entraîne la formation d'un prépolymère avec les groupes fonctionnels A comme groupes d'extrémité et l'on fait réagir ensuite ce prépolymère avec un autre monomère $B_3$ ou avec un monomère $B_2$ avec deux groupes fonctionnels B.

6. Procédé selon les revendications 1 à 5, **caractérisé en ce que** l'on utilise comme monomère $A_2$ un acide dicarboxylique et comme monomère $B_3$ une triamine.

7. Procédé selon les revendications 1 à 6, **caractérisé en ce que** l'on utilise comme monomère $A_2$ de l'acide adipinique et comme monomère $B_3$ de la diéthylènetriamine ou de la tris(2-aminoéthyl)amine.

8. Procédé selon les revendications 1 à 7, **caractérisé en ce que** l'on utilise également pendant ou après la réaction des monomères $A_2$ et $B_3$ un monomère C agissant comme prolongateur de chaîne.

9. Procédé selon les revendications 1 à 8, **caractérisé en ce qu'**avant, pendant ou après la réaction des monomères $A_2$ et $B_3$, on utilise également un comonomère D avec un groupe fonctionnel, ce qui entraîne l'apparition d'un polyamide modifié.

10. Polyamides qui peuvent être obtenus selon le procédé suivant les revendications 1 à 8.

**11.** Utilisation des polyamides selon la revendication 10 pour la préparation de corps moulés, de films, de fibres et de mousses.

**12.** Corps moulés, films, fibres et mousses provenant des polyamides selon la revendication 10.

**IN DER BESCHREIBUNG AUFGEFÜHRTE DOKUMENTE**

**In der Beschreibung aufgeführte Patentdokumente**

- EP 802215 A
- US 6541600 B1
- EP 1295919 A
- US 20030069370 A1
- US 20020161113 A1

**In der Beschreibung aufgeführte Nicht-Patentliteratur**

- **FLORY.** Principles of Polymer Chemistry. Cornell University Press, 1953, 387-398